# EUROPÄISCHE PATENTSCHRIFT

(11) **EP 2 233 759 B1**
(45) Veröffentlichungstag und Bekanntmachung des Hinweises auf die Patenterteilung: **08.05.2013**
(21) Anmeldenummer: 10003308.3
(22) Anmeldetag: 26.03.2010
(51) Int. Cl.: F16C 17/10, F16C 43/02

(54) **Gebaute Bundlagerschale mit halbschalenförmigem Radiallagerteil und mit wenigstens einem scheibenförmigen Axiallagerteil**
Constructed collar bearing lining with half-lining shaped radial bearing piece and at least one disc-shaped axial bearing piece
Coque de pallier d'assemblage montée et équipée d'une partie de pallier radiale en forme de demi-coque et d'au moins une partie de pallier axiale en forme de disque

(30) Priorität: 27.03.2009 DE 102009015370
(43) Veröffentlichungstag der Anmeldung: 29.09.2010
(73) Patentinhaber: KS Gleitlager GmbH, 68789 St. Leon-Rot (DE)
(72) Erfinder: Kapell, Jürgen, 26871 Papenburg (DE); Schaub, Wilhelm, 26871 Papenburg (DE)
(74) Vertreter: Friz, Oliver

(56) Entgegenhaltungen:
- EP-A1- 0 298 953
- DE-A1- 4 041 555
- GB-A- 2 225 392
- US-A- 5 114 246

## Beschreibung

Die Erfindung betrifft eine gebaute Bundlagerschale mit einem halbschalenförmigen Radiallagerteil und mit einem im Bereich einer axialen Stirnseite des Radiallagerteils einseitig befestigbaren scheibenförmigen Axiallagerteil oder mit beidseits des Radiallagerteils befestigbaren scheibenförmigen Axiallagerteilen, wobei jedes Axiallagerteil im wesentlichen in radialer Ebene nach innen vorspringende Haltezungen aufweist, die mit Halteausnehmungen im Bereich der axialen Stirnseite des Radiallagerteils in Eingriff gebracht sind, wobei wenigstens eine der Halteausnehmungen in axialer Richtung randoffen ausgebildet ist.

Gebaute Bundlagerschalen sind in großem Umfang bekannt geworden. Beispielsweise befassen sich EP 0 962 670 B1, EP 0 962 671 B1, EP 0 962 672 B2 und DE 40 15 256 A1 mit der Anbringung des scheibenförmigen Axiallagerteils an dem halbschalenförmigen Radiallagerteil. Bei der letztgenannten Druckschrift weist wenigstens eine Haltezunge in radialer Richtung eine schwalbenschwanzförmige Gestalt auf, und die betreffende Halteausnehmung ist komplementär hierzu ausgebildet. Zur Fixierung des Axiallagerteils am Radiallagerteil wird aber eine axial erstreckte Sicherungsnase des Radiallagerteils verformt. Bei einer gebauten Bundlagerschale gemäß DE-A-24 12 870 A1 werden die Haltezungen des Axiallagerteils in randoffene Halteausnehmungen des Radiallagerteils eingesetzt, und dann wird der flankierende Stirnbereich des Radiallagerteils verformt, so dass ein Formschluss gebildet wird.

Es hat sich gezeigt, dass durch die Verformung von Stirnbereichen des halbschalenförmigen Radiallagerteils Spannungen und Verformungen bei dem Radiallagerteil erzeugt werden, die herstellungstechnisch schwer beherrschbar sind. Der vorliegenden Erfindung liegt daher die Aufgabe zugrunde, die Anbringung des scheibenförmigen Axiallagerteils weiter dahingehend zu verbessern, dass eine wirtschaftliche und verfahrenstechnisch prozesssichere und einfach ausführbare Montage möglich ist, welche die Maßhaltigkeit der Komponenten nicht nachteilig beeinflusst.

Diese Aufgabe wird bei einer gebauten Bundlagerschale der eingangs genannten Art erfindungsgemäß dadurch gelöst, dass die wenigstens eine randoffene Halteausnehmung in axialer Richtung hinterschnitten ist und dass die darin eingreifende Haltezunge in axialer Richtung verstemmt ist und dadurch in Umfangsrichtung in den hinterschnittenen Bereich der Halteausnehmung hinein verdrängt ist, so dass das Axiallagerteil hierdurch unlösbar am Radiallagerteil gehalten ist.

Durch die erfindungsgemäße Verformung der Haltezunge des scheibenförmigen Axiallagerteils, und zwar durch eine Verstemmung in axialer Richtung, lässt sich ein stabiler Hintergriff zwischen Axiallagerteil und Radiallagerteil in axialer Richtung realisieren, ohne dass die hierbei aufgewandten Kräfte zu einer negativen Beeinflussung der Maßhaltigkeit der gebauten Bundlagerschale und ihrer Komponenten führt. Dadurch, dass der Stoßvorgang, also das Verstemmen, senkrecht zur flächenhaften Erstreckung der Haltezunge des Axiallagerteils erfolgt und hierbei gegebenenfalls auf das Radiallagerteil einwirkende Kräfte in axialer Richtung auf das Radiallagerteil eingeleitet werden, kommt es in vorteilhafter Weise zu keiner plastischen Verformung des Radiallagerteils. Es werden keine Spannungen innerhalb des Radiallagerteils aufgebaut. Erfindungsgemäß wird lediglich die Haltezunge durch die im wesentlichen in axialer Richtung erfolgende Verstemmung verformt und in Umfangsrichtung in den hinterschnittenen Bereich der Halteausnehmung hineinverdrängt, wodurch die verliersichere Montage des Axiallagerteils am Radiallagerteil erreicht wird. Auf das Radiallagerteil wird nicht verformend eingewirkt.

In Weiterbildung der Erfindung erweist es sich als vorteilhaft, wenn alle Halteausnehmungen des Radiallagerteils in axialer Richtung randoffen ausgebildet sind. Auf diese Weise lässt sich das Axiallagerteil durch einen einzigen translatorischen axialen Fügevorgang am Radiallagerteil in die Montageposition bringen. Es ist also kein Verkippen bezüglich der Ebene des Radiallagerteils oder ein zusätzlicher Fügevorgang in radialer Richtung erforderlich.

In weiterer Ausbildung der Erfindung erweist es sich als vorteilhaft, wenn mehrere, vorzugsweise drei Halteausnehmungen in axialer Richtung hinterschnitten ausgebildet sind. Von diesen drei Halteausnehmungen und den ihnen zugeordneten drei Haltezungen des Axiallagerteils ist dann vorzugsweise eines im Scheitel der Bundlagerschale und die beiden anderen auf der einen bzw. der anderen Seite des Scheitels angeordnet, und zwar insbesondere und vorzugsweise in einem Winkel zwischen 30° und 40° zum Scheitel (jeweils in der Mitte der Haltezunge abgenommen).

Auf diese Weise lässt sich mit drei Halteausnehmungen und drei Haltezungen auch ein Hintergriff in radialer und durch den Scheitel der Bundlagerschale gehender Richtung erreichen.

Weiter erweist es sich im Hinblick auf die Realisierung einer verliersicheren Anordnung durch Ausbildung eines Hinterschnitts in radialer, insbesondere durch den Scheitel der Bundlagerschale gehender Richtung als vorteilhaft, wenn die Haltezungen im wesentlichen in radialer Richtung, bezogen auf einen Mittelpunkt der Bundlagerschale, erstreckt sind.

Der erfindungsgemäße Hinterschnitt in axialer Richtung bei der oder den Halteausnehmung(en) kann in vorteilhafter Weise in der Ansicht in radialer Richtung schwalbenschwanzförmig ausgebildet sein. Soweit ist, in Umfangsrichtung, beidseits ein Hintergriff ausgebildet. Zweckmäßigerweise wird die im Scheitel der Bundlagerschale angeordnete Halteausnehmung schwalbenschwanzförmig ausgebildet.

Der Winkel der den Hintergriff bildenden Flanke der Ausnehmung zur axialen Richtung beträgt insbesondere 10 - 20°.

Es erweist sich als vorteilhaft, dass die Haltezungen des Axiallagerteils vor dem Verstemmen im Querschnitt in radialer Richtung betrachtet und in der Ansicht in axialer Richtung betrachtet rechteckförmig ausgebildet werden können.

Zur Erzeugung der Verstemmung in axialer Richtung kann in vorteilhafter Weise ein keilförmiges Werkzeug verwendet werden.

Es erweist sich weiter als vorteilhaft, wenn eine Haltezunge, die in beide Umfangsrichtungen in eine Hintergriffsstellung verformt wurde, zwei Verstemmungen und zwei dadurch gebildete Werkzeugeindrücke, vorzugsweise mit gegensinnig geneigten Flanken aufweist. Auf diese Weise kann eine zielgerichtete Verformung und ein zielgerichteter Materialfluss beim Verstemmen erreicht werden, insbesondere wenn ein Werkzeug mit unterschiedlich geneigten Flanken verwendet wird, die dann entsprechend gegensinnig geneigt werden.

Das Axiallagerteil kann in vorteilhafter Weise aus einem Stahl/Aluminium-Verbundwerkstoff bestehen.

Es erweist sich bei einer bevorzugten Ausführungsform als vorteilhaft, wenn drei Haltezungen vorgesehen sind, die in eine Hintergriffstellung in axialer Richtung verstemmt sind. Weiter erweist es sich als vorteilhaft, wenn im Bereich der Trennfläche der Bundlagerschale zwei weitere nicht verstemmte Haltezungen angeordnet sind (nicht dargestellt), die einander im wesentlichen gegenüberliegen und eine zusätzliche Verliersicherung in radialer durch den Scheitel der Bundlagerschale gehender Richtung bilden. Da diese zusätzliche Verliersicherung in radialer Richtung schon vor dem Verstemmen der übrigen Haltezungen besteht, erweist sich dies herstellungstechnisch als vorteilhaft.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der gebauten Bundlagerschale. In der Zeichnung zeigt:
- Figur 1: eine perspektivische Ansicht auf ein Radiallagerteil der herzustellenden gebauten Bundlagerschale;
- Figur 2: eine weitere perspektivische Ansicht des Radiallagerteils mit beidseitig angeordnetem Axiallagerteil, vor dem axialen Verstemmen,
- Figur 3: eine perspektivische Ansicht der gebauten Bundlagerschale nach dem axialen Verstemmen;
- Figur 4: Haltezunge eine Seitenansicht eines zum Verstemmen der verwendbaren keilförmigen Werkzeugs.

Die Figuren zeigen in den verschiedenen Herstellungsstadien eine insgesamt mit dem Bezugszeichen 2 bezeichnete Bundlagerschale mit einem halbschalenförmigen Radiallagerteil 4 und zwei scheibenförmigen Axiallagerteilen 6, die in axialer Richtung beidseits im Bereich einer Stirnseite 8 des Radiallagerteils auf noch näher zu beschreibende Weise gehalten sind. Man erkennt aus den Figuren, dass hierfür im Bereich der axialen Stirnseiten 8 randoffene Halteausnehmungen 10, 11 im Bereich der Stirnseiten 8 des Radiallagerteils 4 ausgebildet sind. Die Halteausnehmungen 10, 11 sind in axialer Richtung 12 hinterschnitten ausgebildet, indem ihre beiden Flanken 14 zur axialen Richtung 12 leicht geneigt sind. Es bildet sich so in der Ansicht in radialer Richtung eine schwalbenschwanzförmige Ausbildung der Halteausnehmungen 10, 11 mit einer Verjüngung zum jeweiligen axialen Rand hin.

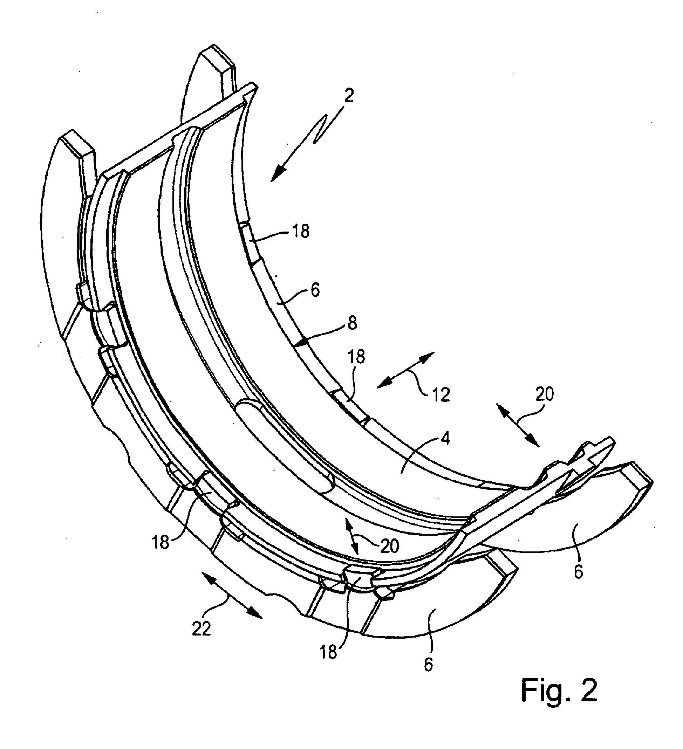

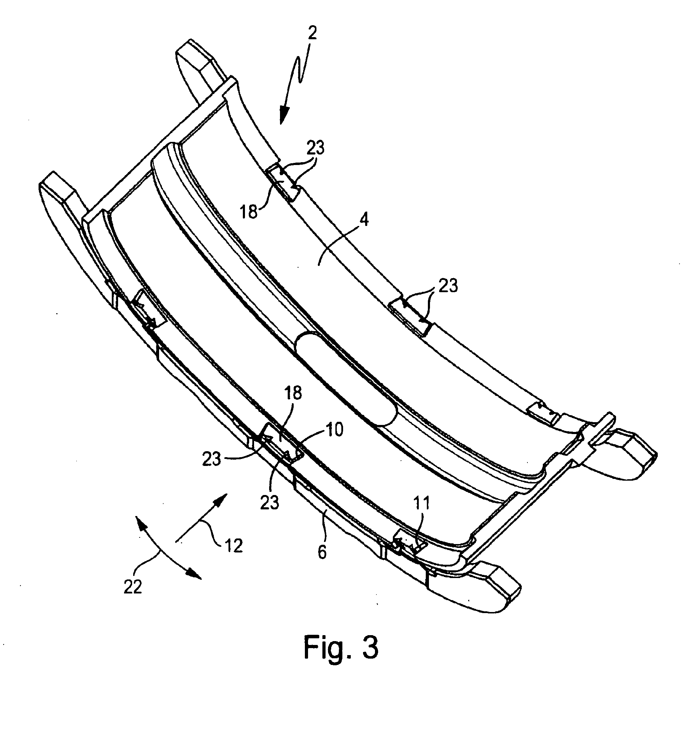

Die beiden Axiallagerteile 6 umfassen den Halteausnehmungen 10, 11 zugeordnete Haltezungen 18, die sich im wesentlichen in radialer Richtung 20 erstrecken. Sie sind im Querschnitt in radialer Richtung 20 und in der Ansicht in axialer Richtung 12 betrachtet, rechteckförmig ausgebildet. Die Haltezungen 18 und die lichte Öffnung in axialer Richtung 12 der zugeordneten Halteausnehmungen 10, 11 sind so ausgebildet, dass das jeweilige Axiallagerteil 6 in axialer Richtung 12 in die in den Figuren 2 und 3 dargestellte Montageposition bringbar ist, also ohne dass das Axiallagerteil 6 in Bezug auf die radiale Ebene verkippt werden müsste oder in radialer Richtung 20 gefügt werden müsste.

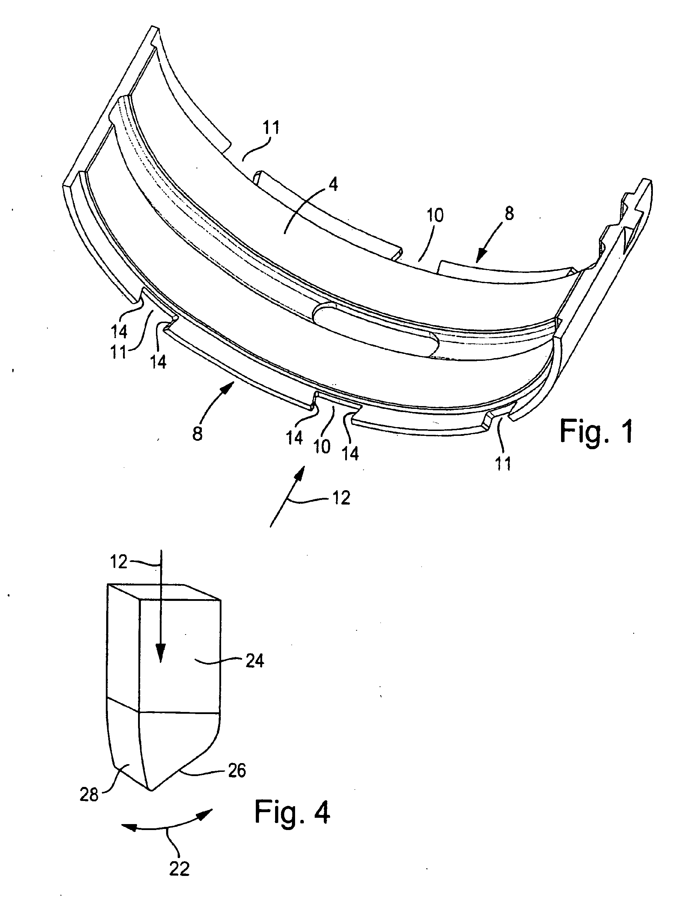

Wenn die Axiallagerteile 6 in die in Figur 2 dargestellte Montageposition am Radiallagerteil 4 gebracht sind, so wird auf die jeweiligen Haltezungen 18 in axialer Richtung 12 eine Stoßverformung, das heißt eine Verstemmung in axialer Richtung 12 ausgeübt. Dabei werden die Haltezungen 18 plastisch verformt. Ihr Material fließt in Umfangsrichtung 22 in die hinterschnittenen Bereiche der Halteausnehmungen 10, 11, also in Richtung auf die jeweilige zur axialen Richtung 12 leicht geneigte Flanke 14 der Halteausnehmungen 10, 11. Hierdurch wird ein in axialer Richtung 12 wirkender Formschluss zwischen den Haltezungen 18 und den Halteausnehmungen 10, 11 erreicht, so dass das jeweilige Axiallagerteil 6 verliersicher, gegebenenfalls mit etwas Spiel, an dem halbschalenförmigen Radiallagerteil 4 gehalten ist. Der Eindruck des hierfür verwandten und in Figur 4 skizzierten Werkzeugs ist mit Bezugszeichen 23 bezeichnet. Man erkennt je Haltezunge 18 zwei solcher Werkzeugeindrücke 23. Die auf diese Weise hergestellte gebaute Bundlagerschale 2 lässt sich nun verbauen und im beispielhaft dargestellten Fall in einem Kurbelgehäuse eines Kraftfahrzeugs zur Lagerung der Kurbelwelle anordnen.

Schließlich zeigt Figur 4 schematisch ein Werkzeug 24, welches in axialer Richtung 12 mit einer betreffenden Haltezunge 18 im Sinne einer Verstemmung zusammenwirkt und hierfür keilförmig verjüngt ausgebildet ist, und zwar mit unterschiedlich geneigten Keilflanken 26, 28. Dies begünstigt den Materialfluss der Haltezunge 18 in Umfangsrichtung 22 der Bundlagerschale 2. Im beispielhaft dargestellten Fall werden die Haltezungen jeweils mit zwei gegensinnig orientierten Verstemmungen versehen, erkennbar an den Werkzeugeindrücken 23.

## Patentansprüche

1. Gebaute Bundlagerschale (2) mit einem halbschalenförmigen Radiallagerteil (4) und mit einem im Bereich einer axialen Stirnseite (8) des Radiallagerteils (4) einseitig befestigbaren scheibenförmigen Axiallagerteil (6) oder mit beidseits des Radiallagerteils (4) befestigbaren scheibenförmigen Axiallagerteilen (6), wobei jedes Axiallagerteil (6) im wesentlichen in radialer Ebene nach innen vorspringende Haltezungen (18) aufweist, die mit Halteausnehmungen (10, 11) im Bereich der axialen Stirnseite (8) des Radiallagerteils (4) in Eingriff gebracht sind, wobei wenigstens eine der Halteausnehmungen (10, 11) in axialer Richtung (12) randoffen ausgebildet ist, **dadurch gekennzeichnet, dass** die wenigstens eine randoffene Halteausnehmung (10, 11) in axialer Richtung (12) hinterschnitten ist und dass die darin eingreifende Haltezunge (18) in axialer Richtung (12) verstemmt ist und dadurch in Umfangsrichtung (22) in den hinterschnittenen Bereich der Halteausnehmung (10, 11) hinein verdrängt ist, so dass das Axiallagerteil (6) hierdurch unlösbar am Radiallagerteil (4) gehalten ist.

2. Bundlagerschale nach Anspruch 1, **dadurch gekennzeichnet, dass** alle Halteausnehmungen (10, 11) in axialer Richtung (12) randoffen ausgebildet sind.

3. Bundlagerschale nach Anspruch 1 oder 2, **dadurch gekennzeichnet, dass** drei Halteausnehmungen (10, 11) in axialer Richtung (12) hinterschnitten ausgebildet sind.

4. Bundlagerschale nach Anspruch 1, 2 oder 3, **dadurch gekennzeichnet, dass** die Halteausnehmung(en) (10, 11) schwalbenschwanzförmig hinterschnitten ist (sind).

5. Bundlagerschale nach einem oder mehreren der vorstehenden Ansprüche, **dadurch gekennzeichnet, dass** die Haltezungen (18) vor dem Verstemmen im Querschnitt in radialer Richtung (20) betrachtet rechteckförmig sind.

6. Bundlagerschale nach einem oder mehreren der vorstehenden Ansprüche, **dadurch gekennzeichnet, dass** die Haltezungen (18) vor dem Verstemmen in der Ansicht in axialer Richtung (12) betrachtet rechteckförmig sind.

7. Bundlagerschale nach einem oder mehreren der vorstehenden Ansprüche, **dadurch gekennzeichnet, dass** die Haltezungen (18) unter Verwendung eines keilförmigen Werkzeugs verstemmt sind.

8. Bundlagerschale nach einem oder mehreren der vorstehenden Ansprüche, **dadurch gekennzeichnet, dass** eine Haltezunge (10, 11), die in beide Umfangsrichtungen in eine Hintergriffsstellung verformt wurde, zwei Verstemmungen und zwei dadurch gebildete Werkzeugeindrücke (23) mit vorzugsweise gegensinnig geneigten Flanken aufweist.

9. Bundlagerschale nach einem oder mehreren der vorstehenden Ansprüche, **dadurch gekennzeichnet, dass** das Axiallagerteil (6) aus einem Stahl/Aluminium-Verbundwerkstoff besteht.

10. Bundlagerschale nach einem oder mehreren der vorstehenden Ansprüche, **dadurch gekennzeichnet, dass** drei Haltezungen (18) vorgesehen sind, die in eine Hintergriffsstellung in axialer Richtung (12) verstemmt sind.

11. Bundlagerschale nach einem oder mehreren der vorstehenden Ansprüche, **dadurch gekennzeichnet, dass** im Bereich der Trennfläche der Bundlagerschale zwei weitere nicht verstemmte Haltezungen angeordnet sind, die einander im wesentlichen gegenüberliegen und eine zusätzliche Verliersicherung in radialer durch den Scheitel der Bundlagerschale gehender Richtung bilden.

## Claims

1. Constructed collar bearing lining (2) with a half-lining shaped radial bearing part (4) and with a disk-shaped axial bearing part (6) fixed on one side in the area of an axial front side (8) of the radial bearing part (4) or with disk-shaped axial bearing parts (6) fixed on both sides of the radial bearing part (4) wherein each axial bearing part (6) comprises retaining tongues (18) projecting inwards essentially in a radial plane, said tongues engaging with retaining recesses (10, 11) in the area of the axial front side (8) of the radial bearing part (4), wherein at least one of the retaining recesses (10, 11) is formed with an open edge in an axial direction (12), **characterised in that** the at least one open-edged retaining recess (10, 11) is undercut at the back in an axial direction (12) and that the retaining tongue (18) engaging in it is staked in an axial direction (12) and, as a result, is forced in a circumferential direction (22) into the undercut area of the retaining recess (10, 11), so that the axial bearing part (6) is held undetachably by this at the radial bearing part (4).

2. Collar bearing lining in accordance with claim 1, **characterised in that** all retaining recesses (10, 11) are formed with an open edge in an axial direction (12).

3. Collar bearing lining in accordance with claim 1 or 2, **characterised in that** three retaining recesses (10, 11) are formed with undercuts at the back in an axial direction (12).

4. Collar bearing lining in accordance with claim 1, 2 or 3, **characterised in that** the retaining recess(es) (10, 11) is/are formed with butterfly-shaped undercuts at the back.

5. Collar bearing lining in accordance with one or more of the preceding claims, **characterised in that**, before the staking, the retaining tongues (18) are rectangular in cross section looking in a radial direction (20).

6. Collar bearing lining in accordance with one or more of the preceding claims, **characterised in that**, before the staking, the retaining tongues (18) are rectangular in elevation looking in an axial direction (12).

7. Collar bearing lining in accordance with one or more of the preceding claims, **characterised in that** the retaining tongues (18) are staked using a wedge-shaped tool.

8. Collar bearing lining in accordance with one or more of the preceding claims, **characterised in that** a retaining tongue (10,11), which was deformed in both circumferential directions into a rear engagement position, comprises two stakings and two tool indentations (23) formed as a result with preferably opposingly inclined flanks

9. Collar bearing lining in accordance with one or more of the preceding claims, **characterised in that** the axial bearing part (6) consists of a steel / aluminium composite material.

10. Collar bearing lining in accordance with one or more of the preceding claims, **characterised in that** three retaining tongues (18) are provided that are staked into a rear engagement position in an axial direction (12).

11. Collar bearing lining in accordance with one or more of the preceding claims, **characterised in that**, in the area of the parting face of the collar bearing lining, two further unstaked retaining tongues are arranged which are positioned essentially opposite each other and form an additional safeguard against loss in a radial direction passing through the crown of the collar bearing lining.

## Revendications

1. Coquille de coussinet à collerette assemblée (2), dotée d'un élément de coussinet à charge radiale en forme de demi-coque (4) et d'un élément de coussinet à charge axiale en forme de disque (6) apte à être fixé d'un côté au niveau d'une face frontale axiale (8) de l'élément de coussinet à charge radiale (4), ou d'éléments de coussinet à charge axiale en forme de disque (6) aptes à être fixés de part et d'autre de l'élément de coussinet à charge radiale (4), chaque élément de coussinet à charge axiale (6) présentant des languettes de retenue (18) qui dépassent vers l'intérieur sensiblement dans un plan radial et qui sont mises en prise avec des évidements de retenue (10, 11) au niveau de la face frontale axiale (8) de l'élément de coussinet à charge radiale (4), au moins un des évidements de retenue (10, 11) étant formé avec un bord ouvert dans la direction axiale (12), **caractérisée en ce que** le ou les évidements à bord ouvert (10, 11) présentent une contre-dépouille dans la direction axiale (12) et **en ce que** la languette de retenue (18) qui s'y engage est matée dans la direction axiale (12) et est, de ce fait, refoulée selon la direction circonférentielle (22) dans la région en contre-dépouille de l'évidement de retenue (10, 11), de sorte que l'élément de coussinet à charge axiale (6) se retrouve maintenu inamovible sur l'élément de coussinet à charge radiale (4).

2. Coquille de coussinet à collerette selon la revendication 1, **caractérisée en ce que** tous les évidements de retenue (10, 11) sont ouverts d'un côté dans la direction axiale (12).

3. Coquille de coussinet à collerette selon la revendication 1 ou la revendication 2, **caractérisée en ce que** trois évidements de retenue (10, 11) présentent une contre-dépouille dans la direction axiale (12).

4. Coquille de coussinet à collerette selon l'une des revendications 1, 2 ou 3, **caractérisée en ce que** le ou les évidements de retenue (10, 11) présentent une contre-dépouille en forme de queue d'aronde.

5. Coquille de coussinet à collerette selon une ou plusieurs des revendications précédentes, **caractérisée en ce que** les languettes de retenue (18) ont, avant matage, une section transversale de forme rectangulaire vue dans la direction radiale (20).

6. Coquille de coussinet à collerette selon une ou plusieurs des revendications précédentes, **caractérisée en ce que** les languettes de retenue (18) ont, avant matage, une forme rectangulaire vue dans la direction axiale (12).

7. Coquille de coussinet à collerette selon une ou plusieurs des revendications précédentes, **caractérisée en ce que** les languettes de retenue (18) sont matées au moyen d'un outil en forme de coin.

8. Coquille de coussinet à collerette selon une ou plusieurs des revendications précédentes, **caractérisée en ce qu'**une languette de retenue (10, 11), qui a été refoulée dans une position de contre-dépouille selon les deux directions circonférentielles, reçoit deux matages et deux empreintes d'outil (23) ainsi formées avec de préférence des flancs inclinés dans des sens opposés.

9. Coquille de coussinet à collerette selon une ou plusieurs des revendications précédentes, **caractérisée en ce que** l'élément de coussinet à charge axiale (6) est réalisé en un matériau composite acier/aluminium.

10. Coquille de coussinet à collerette selon une ou plusieurs des revendications précédentes, **caractérisée en ce qu'**il est prévu trois languettes de retenue (18) qui sont matées dans une position de contre-dépouille selon la direction axiale (12).

11. Coquille de coussinet à collerette selon une ou plusieurs des revendications précédentes, **caractérisée en ce que** dans la région de l'interface du coussinet à collerette sont agencées deux autres languettes de retenue non matées, qui sont disposées sensiblement en regard l'une de l'autre et offrent une sécurité supplémentaire contre la désolidarisation dans une direction radiale passant par le sommet du coussinet à collerette.
